# DEMANDE DE BREVET EUROPEEN

(11) **EP 1 359 658 A1**
(43) Date de publication de la demande: **05.11.2003**
(21) Numéro de dépôt: 03291054.9
(22) Date de dépôt: 30.04.2003
(51) Int. Cl.: H02K 5/22

(54) **Connecteur électrique et moteur électrique équipé d'un tel connecteur**

(30) Priorité: 03.05.2002 FR 0205542
(71) Demandeur: Brandt Components, 58000 Nevers (FR)
(72) Inventeur: Veyrent, Stéphane, 58160 St Ouen sur Loire (FR); Schaditzki, Pierre, 58000 Nevers (FR)
(74) Mandataire: Hartmann, Jean-Luc

(57) **Abrégé**

Ce connecteur électrique, mâle ou femelle, comporte un boîtier isolant à l'intérieur duquel se trouvent des dispositifs de connexion (46). Il est destiné à coopérer avec un connecteur correspondant, femelle ou mâle.

Le boîtier est réalisé en deux parties (2, 4), chacune de ces parties intégrant au moins un dispositif de connexion.

Une première partie (2) du boîtier présente un logement (8) dans lequel peut venir prendre place la seconde partie (4) du boîtier et les deux parties de boîtier assemblées forment alors un boîtier unique comportant un nombre de dispositifs de connexion égal à la somme des nombres de dispositifs de connexion des deux parties de boîtier.

## Description

La présente invention concerne un connecteur électrique et un moteur électrique équipé d'un tel connecteur.

La présente invention concerne plus particulièrement des connecteurs utilisés dans des moteurs électriques pilotés en fréquence. Elle peut toutefois également concerner un connecteur électrique ayant une toute autre application. Un moteur électrique piloté en fréquence comporte généralement un stator monté entre deux paliers flasques. Le stator présente habituellement trois bobinages, chacun de ces bobinages étant relié électriquement à un connecteur électrique appelé également bornier. Pour connaître la vitesse de rotation du moteur, ce qui est nécessaire pour piloter le moteur, on utilise un tachymètre. Deux fils sont généralement nécessaires pour le montage électrique du tachymètre et ces deux fils sont reliés au niveau du connecteur ou bornier. Une fois le moteur assemblé et monté, il suffit alors de venir avec un connecteur correspondant, comportant dans l'exemple précité cinq connexions, sur le connecteur solidaire du moteur. Généralement le connecteur sur le moteur présente des dispositifs de connexion mâles, l'autre connecteur étant en conséquence un connecteur femelle.

Habituellement, au cours de la fabrication du moteur, le stator est équipé d'un connecteur à cinq connexions. Trois de ces connexions sont reliées aux fils des bobinages, les deux autres connexions restant libres dans un premier temps. Après assemblage final du stator sur les paliers flasques, les deux dernières connexions sont reliées à la sonde du tachymètre.

Pour relier ainsi les deux dernières connexions, il convient de manipuler le moteur complet, ce qui est relativement peu aisé et rend cette dernière opération délicate.

La présente invention a alors pour but de fournir des moyens permettant de faciliter les opérations visant à relier des fils aux dispositifs de connexion du connecteur du moteur. De préférence, ces moyens n'entraîneront pas de surcoût sensible par rapport à un moteur de l'art antérieur. Avantageusement, ces moyens seront facilement adaptables aux moteurs déjà existants.

A cet effet, elle propose un connecteur électrique, mâle ou femelle, comportant un boîtier isolant à l'intérieur duquel se trouvent des dispositifs de connexion, destiné à coopérer avec un connecteur correspondant, femelle ou mâle.

Selon l'invention, le boîtier est réalisé en deux parties, chacune de ces parties intégrant au moins un dispositif de connexion, et une première partie du boîtier présente un logement adapté à recevoir la seconde partie du boîtier.

Avec un tel connecteur, en deux parties, il est possible de disposer une partie du connecteur sur un premier élément et l'autre partie de ce connecteur sur un second élément, puis de raccorder électriquement chaque partie de connecteur avant d'assembler les deux éléments. Il suffit alors de placer les deux parties de connecteur sur les éléments correspondants de telle sorte que lors de l'assemblage de ces éléments les deux parties de connecteur viennent "naturellement" s'assembler, sans demander de manipulation particulière. Les deux parties de boîtier assemblées forment alors un boîtier unique comportant un nombre de dispositifs de connexion égal à la somme des nombres de dispositifs de connexion des deux parties de boîtier.

Des moyens de verrouillage sont de préférence prévus entre les première et seconde parties de boîtier. Ainsi le maintien des deux parties du boîtier du connecteur l'une par rapport à l'autre ne dépend pas de l'assemblage des éléments sur lesquels ces parties sont montées mais fait partie du boîtier lui-même.

La présente invention concerne également un moteur électrique comportant un stator muni d'un bobinage, deux paliers flasques entre lesquels se trouve le stator, un rotor monté sur les deux paliers ainsi qu'un connecteur électrique destiné au branchement du moteur, dans lequel le connecteur est un connecteur tel que décrit précédemment.

Dans une forme de réalisation d'un tel moteur électrique, la seconde partie du boîtier du connecteur est fixée par exemple sur le stator et est reliée électriquement aux fils du bobinage de ce stator tandis que la première partie du boîtier du connecteur est fixée par exemple sur un palier flasque de telle sorte que, lors de l'assemblage du stator entre les paliers flasques, la seconde partie du boîtier du connecteur vienne prendre place dans le logement prévu à cet effet dans la première partie du boîtier du connecteur. Dans cette forme de réalisation, la seconde partie du boîtier présente avantageusement un support pour sa fixation sur le stator. Ce support ne forme avantageusement qu'une seule pièce avec la partie du boîtier destinée à recevoir des dispositifs de connexion. Pour une fixation aisée sur le stator d'un moteur, le support présente avantageusement des pattes élastiques destinées à venir s'emboîter dans des encoches présentes au niveau du bobinage du stator.

Dans un moteur électrique selon l'invention, le logement réalisé dans la première partie du boîtier est de préférence un logement traversant s'étendant parallèlement à l'axe du moteur. Cette configuration permet un montage facile du boîtier du connecteur pendant l'assemblage du moteur.

Pour faciliter la connexion du connecteur ainsi réalisé sur le moteur avec un connecteur extérieur, la première partie du boîtier comporte avantageusement des moyens de détrompage et/ou de verrouillage destinés à coopérer avec le connecteur correspondant.

Dans une forme de réalisation préférée du moteur, la première partie du boîtier est encliquetée dans un logement prévu à cet effet sur un palier flasque.

La présente invention est bien adaptée à un moteur électrique asynchrone piloté en fréquence.

Les détails et avantages de la présente invention ressortiront mieux de la description qui suit, faite en référence au dessin schématique annexé sur lequel :
La figure 1 est une vue en perspective éclatée d'un boîtier de connecteur selon l'invention,
La figure 2 est une vue du boîtier de la figure 1 en position montée,
La figure 3 est une vue correspondant à la figure 1 sous un autre angle de vue,
La figure 4 est une vue semblable à la figure 2 sous un autre angle de vue,
La figure 5 montre en perspective éclatée un moteur équipé d'un connecteur selon l'invention, et
La figure 6 montre le moteur de la figure 5 en position montée.

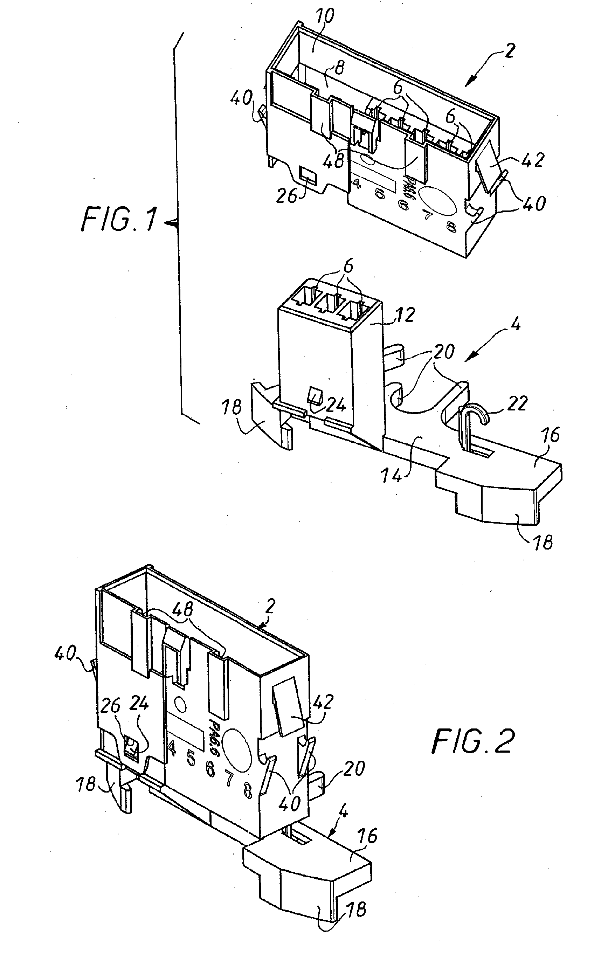

Les figures 1 à 4 montrent une forme de réalisation d'un boîtier et d'un connecteur selon l'invention. Sur ces figures, les dispositifs de connexion ne sont pas représentés.

Le boîtier représenté au dessin est constitué de deux parties, une première partie 2 et une seconde partie 4.

La première partie 2 est de forme sensiblement parallélépipédique et est réalisée en matière synthétique moulée par injection. Elle est destinée à recevoir des dispositifs de connexion. Dans le cas de figure représenté au dessin, les dispositifs de connexion (non représentés) sont des languettes de connexion connues sous le nom de languettes "Faston" (Marque déposée). Il s'agit de languettes planes rectangulaires, de forme allongée, munies d'un trou pour permettre un accrochage avec une pièce complémentaire. On remarque à l'intérieur de la première partie 2 cinq encoches 6 destinées à recevoir de telles languettes. Toutes ces encoches 6 sont disposées à une même hauteur dans la première partie 2 du boîtier et avec la même orientation. Ces encoches 6 sont disposées avec un pas régulier qui correspond au pas séparant habituellement des languettes "Faston" de taille correspondante dans un connecteur classique.

Ici, la première partie du boîtier présente la même forme extérieure qu'un connecteur mâle présentant huit dispositifs de connexion mais seules cinq encoches 6 sont prévues à l'intérieur de cette première partie 2 de boîtier. Un espace vide remplace les trois dispositifs de connexion manquants et les logements correspondants. La première partie 2 du boîtier comporte ainsi d'un côté une rangée de cinq encoches 6 destinées chacune à recevoir une languette de type "Faston" et de l'autre côté un logement 8 dont la dimension correspond à l'encombrement de trois dispositifs de connexion, y compris leurs moyens de support et fixation.

Le logement 8 est traversant. Ce logement 8 débouche d'une part dans la face avant 10 du connecteur destinée à recevoir un connecteur femelle correspondant et débouche d'autre part dans la face opposée à la face avant 10 de la première partie 2 du boîtier. Ce logement 8 est de section sensiblement rectangulaire et s'étend dans la même direction que les encoches 6, direction qui correspond également à la direction de connexion entre le connecteur mâle représenté au dessin et le connecteur femelle (non représenté) correspondant.

La seconde partie 4 du boîtier comporte d'une part un bornier 12 et d'autre part un support 14.

Le bornier 12 est destiné à recevoir trois dispositifs de fixation de type languette "Faston". Il présente une forme profilée de section rectangulaire, cette section étant de taille adaptée à celle du logement 8 de la première partie du boîtier. Trois encoches 6 sont réalisées dans le bornier 12. Ces encoches s'étendent longitudinalement. Elles sont également destinées à recevoir des languettes de type "Faston".

Le bornier 12 et la première partie 2 du boîtier sont réalisés de telle manière que lorsque le bornier 12 est introduit à l'intérieur du logement 8 de la première partie, les trois encoches 6 du bornier puissent venir s'aligner avec les cinq encoches 6 de la première partie 2 de manière à former une rangée de huit encoches, si bien que l'ensemble formé par le bornier 12 et la première partie 2 du boîtier soit similaire à un boîtier de connecteur mâle destiné à porter huit languettes "Faston".

Le support 14 ne forme qu'une seule pièce avec le bornier 12. Cet ensemble est par exemple réalisé en matière synthétique moulée par injection. La forme du support 14 est adaptée à l'élément sur lequel doit venir se fixer le bornier 12. Dans le cas présent, le support 14 est adapté à un stator de moteur asynchrone piloté en fréquence. La forme du support représentée au dessin est donnée à titre d'exemple non limitatif. Ce support comporte une base 16 sensiblement plane, des butées de positionnement 18, des dents d'accrochage 20 et un crochet de guidage 22.

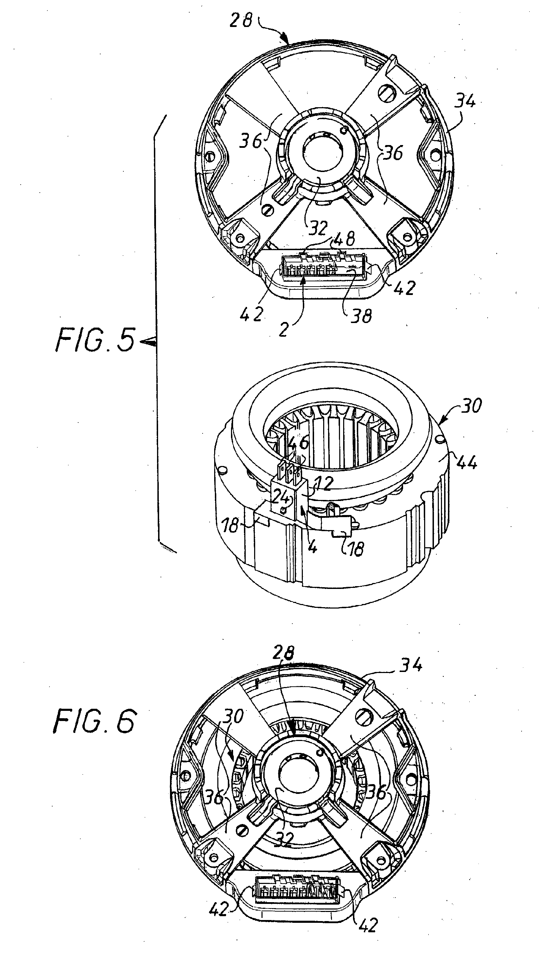

La base 16 s'étend dans un plan sensiblement perpendiculaire à la direction longitudinale du bornier 12. Les butées 18 sont disposées sur un bord de la base 16 et s'étendent à l'opposé du bornier 12. Le crochet de guidage 22 sert à maintenir les fils connectés au niveau du bornier 12. Les dents d'accrochage 20 s'étendent dans le plan de la base 16. Elles partent d'un bord de cette base 16 opposé au bord portant les butées de positionnement 18. Les fonctions des différentes parties du support 14 seront décrites plus en détail ci-après en référence aux figures 5 et 6.

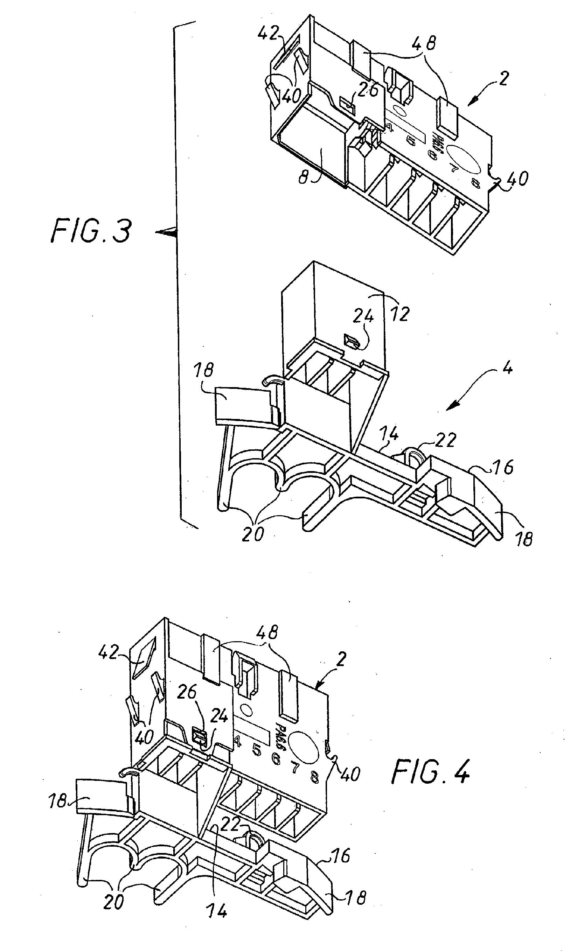

Sur les figures 2 et 4, les première et seconde parties du boîtier sont assemblées. On retrouve alors un ensemble équivalent à un boîtier de connecteur mâle classique à huit broches muni d'un support, ici le support 14. Les huit encoches 6 sont alignées comme dans un boîtier de connecteur mâle classique. Pour maintenir ces encoches bien alignées, des moyens de verrouillage sont prévus entre le bornier 12 et le logement 8 correspondant. Comme on le voit sur les figures 1 et 3, une face latérale du bornier 12 présente un doigt d'encliquetage 24 tandis que la paroi correspondante du logement 8 comporte une fenêtre 26 correspondante. La fenêtre 26 et le doigt d'encliquetage 24 correspondant sont disposés de telle sorte que lorsque le bornier 12 coulisse dans son logement 8, le doigt d'encliquetage puisse pénétrer dans la fenêtre 26 et de telle manière que lorsque le doigt 24 est dans la fenêtre 26, les encoches 6 du bornier 12 sont alignées avec les encoches 6 de la première partie du boîtier. Les dimensions du doigt d'encliquetage 24 sont adaptées aux dimensions de la fenêtre 26 de manière à n'avoir qu'un jeu réduit lorsque le doigt 24 se trouve dans la fenêtre 26.

Dans une variante de réalisation non représentée au dessin, le maintien des première et seconde parties du boîtier peut être assuré par un blocage élastique. L'une et/ou l'autre des parties du boîtier comporte alors une zone élastique, par exemple sous la forme d'un bossage, qui est comprimée lors de l'assemblage de ces deux parties de boîtier. Les forces alors induites assurent le maintien en position assemblée des deux parties du boîtier.

Les figures 5 et 6 montrent un exemple d'utilisation du connecteur représenté sur les figures 1 à 4. Dans cet exemple, la première partie 2 du boîtier est fixée sur un palier flasque 28 tandis que la seconde partie 4 du boîtier se trouve sur un stator 30.

Le stator 30 est un stator de moteur asynchrone piloté en fréquence. Il est destiné à être monté en sandwich entre deux paliers flasques 28. Ces paliers flasques 28 supportent alors un rotor non représenté tournant autour des deux paliers. L'ensemble est par exemple maintenu à l'aide de longues vis reliant les deux paliers flasques 28.

Chaque palier flasque 28 est par exemple réalisé en aluminium. De façon classique, un tel palier flasque est une pièce sensiblement plane qui présente un palier 32 central et une couronne périphérique 34. Quatre branches 36 radiales relient le palier central 32 à la couronne périphérique 34. Au niveau de la couronne périphérique 34, le palier flasque 28 présente un logement 38 de forme adaptée pour recevoir la première partie 2 du boîtier de connecteur. Ce logement 38 est disposé entre deux branches 36.

Pour maintenir la première partie 2 du boîtier de connecteur sur un palier flasque 28, deux faces latérales opposées de la première partie 2 du boîtier portent chacune d'une part deux butées 40 et d'autre part une patte élastique 42. La première partie 2 est ainsi introduite dans le logement 38 correspondant. Au cours de cette introduction, les pattes élastiques 42 se replient vers l'intérieur du boîtier et l'introduction continue jusqu'à ce que les butées 40 viennent en appui contre un bord du logement 38. L'espace prévu entre les pattes élastiques 42 et les butées 40 correspondantes est tel qu'à ce moment les pattes élastiques sont libérées si bien qu'elles viennent bloquer la première partie 2 dans cette position. Lorsque la première partie 2 est montée sur le palier flasque 28, le logement 8 s'étend parallèlement à l'axe du moteur et est donc sensiblement perpendiculaire au plan du palier flasque 28.

La seconde partie 4 du boîtier du connecteur est quant à elle disposée sur le stator 30. La base 16 vient en appui sur un rebord 44 du stator 30. Les dents 20 viennent se coincer dans des interstices que l'on retrouve habituellement dans un bobinage entre les enroulements de fils. Les butées 18 permettent de positionner l'ensemble par rapport à la périphérie du stator 30. Le bornier 12 s'étend alors parallèlement à l'axe du stator 30 qui correspond après montage à l'axe du moteur.

Le montage du moteur est alors réalisé comme décrit ci-après.

Un bobinage est réalisé avec trois fils sur le stator 30. Les extrémités des fils sont équipées chacune d'une languette "Faston" 46 directement sertie sur les fils de cuivre. Ces languettes 46 sont alors montées au niveau des encoches 6 prévues dans le bornier 12 à cet effet. Le bornier 12 et le support 14 qui lui est associé sont maintenus à distance du stator 30 et ce dernier est plongé dans un bain de vernis tout en veillant à ce que le bornier 12 et son support 14 ne soient pas immergés. Après imprégnation du stator, le boîtier 12 vient prendre place sur le stator 30. La base 16 vient alors en appui sur le rebord 44 du stator et les dents 20 sont enfoncées radialement jusqu'à ce que les butées 18 viennent en appui à la périphérie du stator. Le guidage des fils en cuivre partant du bobinage et arrivant au bornier 12 est assuré grâce au crochet 22. Les languettes 46, et de manière plus générale le bornier 12, s'étendent alors parallèlement à l'axe du stator.

Parallèlement à la fabrication du stator 30, la première partie 2 du boîtier du connecteur est montée sur un palier flasque 28 de telle sorte que le logement 8 traversant s'étend perpendiculairement au plan du palier flasque 28 (soit dans la direction du palier 32. Cette première partie 2 du boîtier du connecteur peut alors déjà être reliée électriquement, par exemple aux fils d'une sonde de tachymètre (non représentée). On obtient alors deux ensembles entièrement connectés électriquement, d'une part le stator 30 et d'autre part le palier flasque 28 et sa sonde de tachymètre.

Le montage du moteur se fait alors simplement en venant glisser le palier flasque 28 de telle sorte que le bornier 12 vienne se loger à l'intérieur du logement 8 prévu à cet effet dans la première partie du boîtier du connecteur, en disposant de l'autre côté du stator 30 un second palier flasque et en reliant le tout à l'aide de vis.

A l'état monté, le moteur présente alors un seul connecteur mâle. Il suffit, comme pour un moteur de l'art antérieur, de venir brancher sous ce connecteur une prise femelle pour pouvoir faire fonctionner le moteur. Pour éviter une mauvaise connexion, des moyens de détrompage constitués de rainures 48 sont réalisés sur le connecteur mâle. Des nervures correspondantes sont alors présentes sur le connecteur femelle correspondant. Les rainures 48 se retrouvent sur la première partie 2 du boîtier qui intègre l'enveloppe extérieure du connecteur selon l'invention.

Dans une même opération, on réalise ainsi à la fois le montage du moteur et du connecteur. Aucune opération supplémentaire n'est ici nécessaire.

Par rapport au montage d'un moteur classique de l'art antérieur, l'opération est facilitée car la connexion électrique peut être réalisée au niveau du connecteur avant le montage du moteur. On ne manipule alors que des pièces de poids et d'encombrement réduits. Les opérations de connexion de fils électriques en sont donc simplifiées.

On remarque qu'il n'y a pas de surcoût important entre un moteur selon l'invention et un moteur de l'art antérieur.

Dans le montage du moteur tel que décrit ci-dessus, il est inutile de prévoir un câble gainé entre chaque fil cuivre et le bornier. Ceci est possible car le bornier se trouve dans l'encombrement du moteur.

La présente invention ne se limite pas au mode de réalisation décrit ci-dessus à titre d'exemple non limitatif. Elle concerne également toutes les variantes de réalisation à la portée de l'homme du métier, dans le cadre des revendications ci-après.

Ainsi par exemple, un connecteur tel que décrit plus haut pourrait être utilisé dans une autre application qu'un moteur électrique. Si l'on veut par exemple monter en parallèle deux dispositifs électriques munis d'un connecteur, on peut prévoir d'utiliser un connecteur tel que décrit ci-dessus. Un seul branchement permettra alors d'alimenter les deux dispositifs électriques.

Le connecteur décrit plus haut est un connecteur mâle. On ne sortirait pas du cadre de l'invention en appliquant le même principe à un connecteur femelle.

Le nombre de dispositifs de connexion peut varier par rapport aux nombres de dispositifs de connexion prévus plus haut. De même, il est possible d'utiliser des dispositifs de connexion différents de ceux décrits (languettes "Faston").

Dans le cas de l'application à un moteur, il est également envisageable de monter la première partie du connecteur, celle présentant le logement destiné à recevoir la seconde partie du connecteur sur le stator et de monter alors la seconde partie du connecteur sur le palier flasque.

Les montages des première et seconde parties de boîtier sur le stator et le palier flasque sont données à titre d'exemple, de même que l'assemblage entre ces deux parties de boîtier. Tout autre type de montage (par vissage, concordance de formes, etc...) peut être envisagé.

## Revendications

1. Connecteur électrique, mâle ou femelle, comportant un boîtier isolant à l'intérieur duquel se trouvent des dispositifs de connexion (46), destiné à coopérer avec un connecteur correspondant, femelle ou mâle,
**caractérisé en ce que** le boîtier est réalisé en deux parties (2, 4), chacune de ces parties intégrant au moins un dispositif de connexion, et **en ce qu'**une première partie (2) du boîtier présente un logement (8) adapté à loger la seconde partie (4) du boîtier.

2. Connecteur électrique selon la revendication 1, **caractérisé en ce que** des moyens de verrouillage (24, 26) sont prévus entre les première (2) et seconde (4) parties de boîtier.

3. Moteur électrique comportant un stator (30) muni d'un bobinage, deux paliers flasques (28) entre lesquels se trouve le stator (30), un rotor monté sur les deux paliers (32) ainsi qu'un connecteur électrique destiné au branchement du moteur, **caractérisé en ce que** le connecteur est un connecteur selon l'une des revendications 1 ou 2.

4. Moteur électrique selon la revendication 4, **caractérisé en ce que** la seconde partie (4) du boîtier du connecteur est fixée sur le stator (30) et est reliée électriquement aux fils du bobinage de ce stator tandis que la première partie (2) du boîtier du connecteur est fixée sur un palier flasque (28) de telle sorte que, lors de l'assemblage du stator (30) entre les paliers flasques (28), la seconde partie (4) du boîtier du connecteur vienne prendre place dans le logement (8) prévu à cet effet dans la première partie (2) du boîtier du connecteur.

5. Moteur électrique selon la revendication 4, **caractérisé en ce que** la seconde partie (4) du boîtier présente un support (14) pour sa fixation sur le stator (30).

6. Moteur électrique selon la revendication 5, **caractérisé en ce que** le support (14) présente des pattes élastiques (20) destinées à venir s'emboîter dans des encoches présentes au niveau du bobinage du stator.

7. Moteur électrique selon l'une des revendications 3 à 6, **caractérisé en ce que** le logement (8) réalisé dans la première partie du boîtier est un logement traversant s'étendant parallèlement à l'axe du moteur.

8. Moteur électrique selon l'une des revendications 3 à 7, **caractérisé en ce que** la première partie (2) du boîtier comporte des moyens de détrompage (48) et/ou de verrouillage destinés à coopérer avec le connecteur correspondant.

9. Moteur électrique selon l'une des revendications 3 à 8, **caractérisé en ce que** la première partie (2) du boîtier est encliquetée dans un logement (38) prévu à cet effet sur un palier flasque (28).

10. Moteur électrique selon l'une des revendications 3 à 9, **caractérisé en ce qu'**il s'agit d'un moteur asynchrone piloté en fréquence.
